# EUROPÄISCHE PATENTSCHRIFT

(11) **EP 2 437 021 B1**
(45) Veröffentlichungstag und Bekanntmachung des Hinweises auf die Patenterteilung: **01.05.2013**
(21) Anmeldenummer: 10182444.9
(22) Anmeldetag: 29.09.2010
(51) Int. Cl.: F27D 21/02, F27D 25/00, C21C 5/46, F23M 11/04, G02B 23/24

(54) **Vorrichtung und Verfahren zum Schutz einer optischen Beobachtungsöffnung**
Device and method for protecting an optical observation opening
Dispositif et procédé de protection d'une ouverture d'observation optique

(43) Veröffentlichungstag der Anmeldung: 04.04.2012
(73) Patentinhaber: TMT Tapping-Measuring-Technology GmbH, 57072 Siegen (DE)
(72) Erfinder: Morgenstern, Hans-Uwe, 57258 Freudenberg (DE); Oster, Ulrich, 57234 Wilnsdorf (DE)
(74) Vertreter: advotec.

(56) Entgegenhaltungen:
- EP-A1- 0 374 642
- DE-A1- 2 948 295
- JP-A- 60 105 885
- US-A- 5 306 209

## Beschreibung

Die Erfindung betrifft eine Blendenvorrichtung sowie ein Verfahren zum Schutz einer optischen Beobachtungsöffnung, insbesondere zum Schutz der Beobachtungsöffnung vor Verschmutzungen einer Schmutzatmosphäre eines Hochofens oder dergleichen, mit einer Düseneinheit und einem Spülgasraum, wobei die Düseneinheit eine Blendenöffnung für die Beobachtungsöffnung ausbildet und zur Ausbildung einer Spülgasströmung dient, wobei der Spülgasraum zwischen einer optischen Fläche der Beobachtungsöffnung und der Blendenöffnung ausgebildet ist, und wobei der Spülgasraum mit einem Spülgas beaufschlagt und das Spülgas durch die Blendenöffnung in die Schmutzatmosphäre geleitet werden kann.

Zur Beobachtung eines Innenraums eines Hochofens ist es beispielsweise bekannt, Beobachtungsöffnungen vorzusehen, die einen Einblick in den Hochofen ermöglichen. Auch kann eine derartige Beobachtungsöffnung mit einer Kamera ausgestattet sein, die den Innenraum des Hochofens kontinuierlich zur Übertragung und Darstellung in einer Leitwarte aufnimmt. Die Kamera oder auch die Beobachtungsöffnung alleine kann über eine Weitwinkeloptik verfügen, die einen umfassenden Einblick in den Innenraum ermöglicht. Eine möglichst kleine Blendenöffnung der Beobachtungsöffnung kann daher mit einem konischen Öffnungswinkel ausgebildet sein, der im Wesentlichen einem Öffnungswinkel eines Weitwinkelobjektivs entspricht. Auch ist in der Beobachtungsöffnung eine optische Schutzscheibe angeordnet, die ein Weitwinkelobjektiv oder einen Beobachter vor unzuträglicher Wärmestrahlung oder Schmutzpartikeln schützen soll. Da sich in einer Hochofenatmosphäre sehr viel Schmutz befindet, würde die Schutzscheibe bzw. die Beobachtungsöffnung relativ schnell verschmutzen und undurchsichtig werden. Um dies zu verhindern ist es bekannt, die Schutzscheibe mit einer Spülgasströmung aus beispielsweise Stickstoff zu beaufschlagen, derart, dass Spülgas an der Schutzscheibe vorbeigeleitet wird und über die Blendenöffnung in die Schmutzatmosphäre des Hochofens austritt. So wird verhindert, dass Schmutzpartikel zur Schutzscheibe gelangen können.

Da das Spülgas unter einem hohen Druck aus der Blendenöffnung in die Schmutzatmosphäre eingeblasen wird, bilden sich Strömungen quer zu einer Spülgasströmung, die in Richtung der Blendenöffnung Schmutzpartikel fördern. Dies führt dazu, dass sich um die Blendenöffnung herum, an einer stirnseitigen Wandung der Blendenöffnung bzw. des Hochofens vermehrt Schmutzpartikel ablagern und die Blendenöffnung von einem seitlichen Rand her mit Schmutz zuwächst. Insbesondere wenn die Blendenöffnung mit einem Öffnungswinkel wie z.B. beschrieben in EP 0374642 A1, ausgebildet ist, kann das unter hohem Druck ausströmende Spülgas nicht schnell genug expandieren, so dass sich an einer Flanke der Blendenöffnung ein Unterdruck bildet, der Wirbel erzeugt und vermehrt Schmutzpartikel ansaugt, welche sich in beispielsweise einem Konus der Blendenöffnung ablagern und so ein Gesichtsfeld einer Optik einschränken können. Insgesamt erfordern diese Effekte eine häufige Reinigung der Blendenöffnung. Auch tritt dieses Problem nicht nur an Hochöfen auf, sondern grundsätzlich in allen geschlossenen Räumen mit einer Schmutzatmosphäre, die eine derartige Blendenöffnung verunreinigen kann.

Der vorliegenden Erfindung liegt daher die Aufgabe zugrunde, eine Blendenvorrichtung sowie ein Verfahren zum Schutz einer optischen Beobachtungsöffnung vorzuschlagen, die bzw. das eine schnelle Verschmutzung einer Blendenöffnung verhindert.

Diese Aufgabe wird durch eine Blendenvorrichtung mit den Merkmalen des Anspruchs 1 und ein Verfahren mit den Merkmalen des Anspruchs 15 gelöst.

Die erfindungsgemäße Blendenvorrichtung zum Schutz einer optischen Beobachtungsöffnung, insbesondere zum Schutz der Beobachtungsöffnung vor Verschmutzungen einer Schmutzatmosphäre eines Hochofens oder dergleichen, weist eine Düseneinheit und einen Spülgasraum auf, wobei die Düseneinheit einer Blendenöffnung für die Beobachtungsöffnung ausbildet und zur Ausbildung einer Spülgasströmung dient, wobei der Spülgasraum zwischen einer optischen Fläche der Beobachtungsöffnung und der Blendenöffnung ausgebildet ist, wobei der Spülgasraum mit einem Spülgas beaufschlagt und das Spülgas durch die Blendenöffnung in die Schmutzatmosphäre geleitet werden kann, wobei die Düseneinheit eine Strömungsführungseinrichtung aufweist, die eine Strömungsführung von in die Schmutzatmosphäre austretendem Spülgas bewirkt bzw. bewirken kann.

Weiter ist die Blendenöffnung konisch sich in Öffnungsrichtung der Blendenöffnung erweiternd ausgebildet, wobei die Strömungsführungseinrichtung derart ausgebildet ist, dass eine spiralförmige Bewegung des Spülgases um eine Längsachse der Blendenöffnung bewirkt werden kann, und dass die Düseneinheit eine weitere Strömungsführungseinrichtung aufweist, die einen Ringspalt ausbildet, der die Blendenöffnung umgibt, und aus dem Spülgas ringförmig austreten kann.

Insbesondere durch die Strömungsführungseinrichtung wird es möglich, einen Spülgasstrom so auszubilden, dass sich durch die Spülgasströmung an einer Flanke in der Blendenöffnung kein Unterdruck bildet und so ein Ansaugen von Schmutzpartikeln verhindert wird. Weiter ist die Spülgasströmung im Bereich eines Außendurchmessers der Blendenöffnung besonders stark ausgeprägt, so dass ein Zuwachsen der Blendenöffnung durch stirnseitige Ablagerung von Schmutzpartikeln verhindert wird. Im Unterschied zum Stand der Technik, bei dem eine im Wesentlichen alleine durch eine Form der Blendenöffnung ausgebildete Spülgasströmung entsteht, ist bei der Erfindung die Ausbildung einer gerichteten Spülgasströmung möglich, die eine Ablagerung von Schmutzpartikeln an der Blendenöffnung weitestgehend verhindert. Zu diesem Zweck ist in der Düseneinheit eine Strömungsführungseinrichtung ausgebildet, die im Bereich der Blendenöffnung eine derartige Spülgasströmung ausbilden kann. Die optische Fläche kann als eine einfache planparallele Platte bzw. Scheibe ausgebildet sein, hinter der ein Objektiv angeordnet ist. Auch kann die optische Fläche von einer Linse des Objektivs selbst ausgebildet sein. In diesem Fall kann beispielsweise auch eine Kamera innerhalb des Spülgasraumes angeordnet sein.

In einer vorteilhaften Ausführungsform kann der Spülgasraum konisch, sich in Öffnungsrichtung der Blendenöffnung verjüngend, ausgebildet sein. Das heißt der Spülgasraum kann bereits die Ausbildung einer Spülgasströmung bewirken, welche insbesondere an einer Flanke der Blendenöffnung mit vergleichsweise hohem Druck entlang strömt. Auch kann durch die konische Form des Spülgasraums eine laminare Strömung innerhalb des Spülgasraums begünstigt und eine Bildung von Wirbeln vermieden werden.

Die Blendenöffnung ist konisch, sich in Öffnungsrichtung der Blendenöffnung erweiternd ausgebildet sein. Eine konische Blendenöffnung ist insbesondere dann vorteilhaft, wenn ein Weitwinkelobjektiv zur Beobachtung verwendet wird. Ein Öffnungswinkel der Blendenöffnung kann dann im Wesentlichen einem Öffnungswinkel des Objektivs entsprechen. Davon abgesehen kann die Blendenöffnung auch schlitzförmig, zylindrisch bzw. mit geraden Flanken ausgebildet sein.

In der der Blendenvorrichtung ist ein kreisringförmiger Ringkanal ausgebildet, mittels dem der Düseneinheit Spülgas zugeführt werden kann. So kann die Blendenöffnung von allen Seiten mit Spülgas versorgt bzw. die optische Fläche der Beobachtungsöffnung bzw. eine Schutzscheibe allseitig mit Spülgas beströmt werden. Auch können so Druckunterschiede innerhalb der Düseneinheit, welche zu unerwünschten Verwirbelungen von Spülgas führen können, weitestgehend vermieden werden.

In diesem Zusammenhang kann der Ringkanal so ausgebildet sein, dass eine Rotationsströmung von Spülgas im Ringkanal bewirkt werden kann. Eine Rotationsströmung kann beispielsweise durch eine außermittige, tangentiale Einleitung von Spülgas in den Ringkanal oder durch eine Strömungsrichtung beeinflussende Lamellen erzeugt werden. Eine ringförmige Führung der Spülgasströmung bereits im Ringkanal kann die aus der Blendenöffnung austretende Spülgasströmung so beeinflussen, dass diese mit einem Drall, das heißt spiralförmig aus der Blendenöffnung austritt, was eine Reinhaltung der Blendenöffnung begünstigt.

Zur Vermeidung von Turbulenzen und Wirbeln innerhalb der Blendenvorrichtung ist es vorteilhaft, wenn die Strömungsführungseinrichtung relativ zu einer Längsachse der Blendenöffnung rotationssymmetrisch ausgebildet ist. In einer vorteilhaften Ausführungsform kann die Düseneinheit eine innere Strömungsführungseinrichtung aufweisen, die derart ausgebildet ist, dass eine spiralförmige Bewegung des Spülgases um eine Längsachse der Blendenöffnung bewirkt werden kann. Insbesondere bei konischen Blendenöffnungen kann so eine Bildung eines Unterdrucks im Bereich von Flanken und somit eine Ablagerung von Schmutzpartikeln vermieden werden. Das spiral- bzw. drallförmig austretende Spülgas expandiert durch so bewirkte Zentrifugalkräfte vergleichsweise schnell in eine seitliche Richtung quer zur Längsachse der Blendenöffnung, so dass die Spülgasströmung auch an der Flanke der konischen Blendenöffnung anliegt.

Zur Ausbildung dieser spiralförmigen Bewegung kann die Strömungsführungseinrichtung zwischen einem Ringkanal und dem Spülgasraum angeordnet sein. So kann das Spülgas allseitig in den Spülgasraum einströmen, wobei das Spülgas durch die Strömungsführungseinrichtung eine Änderung einer Strömungsrichtung erfährt und im Spülgasraum eine kreisförmige bzw. rotierende Bewegung ausführt.

Die Strömungsführungseinrichtung kann auch zwischen einem Ringkanal und der Blendenöffnung angeordnet sein. So kann eine Rotation der Spülgasströmung dann auch erst im Bereich der Blendenöffnung ausgebildet werden. Dies kann vorteilhaft sein, wenn eine Rotation der Spülgasströmung innerhalb des Spülgasraumes unerwünscht ist.

Alternativ kann die Strömungsführungseinrichtung zwischen einem Ringkanal und einem Übergangsbereich von Spülgasraum und Blendenöffnung angeordnet sein. Der Übergangsbereich kann beispielsweise eine Engstelle zwischen dem Spülgasraum und der Blendenöffnung sein, innerhalb der die innere Strömungsführungseinrichtung angeordnet ist.

Die Strömungsführungseinrichtung kann durch Strömungskanäle ausgebildet sein, deren Kanallängsachsen jeweils quer, relativ zu der Längsachse der Blendenöffnung verlaufen ohne die Längsachse zu schneiden. Das heißt die Strömungskanäle können relativ zu der Längsachse so ausgerichtet sein, dass sie beispielsweise tangential in den Spülgasraum eintreten, so dass eine rotierende Spülgasströmung im Spülgasraum ausgebildet wird. Auch ist es vorteilhaft, wenn die Strömungskanäle so ausgerichtet sind, dass eine unmittelbare Anströmung der optischen Fläche erfolgt, um eine Ablagerung von Schmutzpartikeln auf dieser wirksam auszuschließen.

Diese Strömungskanäle können aus Bohrungen oder Lamellen gebildet sein. Das heißt die Strömungsführungseinrichtung kann aus einer oder auch mehreren Bohrungen gebildet sein, die in radialer Richtung in den Spülgasraum oder die Blendenöffnung bzw. in den Übergangsbereich außermittig hineinführen. Der gleiche Effekt einer rotierenden Strömung kann durch die Verwendung von Lamellen erzielt werden. Hier ist sogar noch eine weitergehende Beeinflussung einer Spülgasströmung möglich, da die Lamellen bzw. deren wirksame Fläche auch relativ zu einer von der optischen Fläche gebildeten Ebene geneigt sein können.

Die Düseneinheit weist eine weitere Strömungsführungseinrichtung auf, die zumindest einen Ringspalt ausbildet, der die Blendenöffnung umgibt, und aus dem Spülgas ringförmig austreten kann. Demnach wird die durch die Blendenöffnung austretende Spülgasströmung durch eine weitere Spülgasströmung ergänzt, welche diese koaxial umgibt. Diese äußere Spülgasströmung bewirkt, dass sich an der Blendenöffnung ablagernde Verschmutzungen nicht in die Blendenöffnung hinein wachsen können, da sie den Ringspalt aufgrund der daraus austretenden Spülgasströmung nicht überwinden können. Auch kann ein Ansaugen von Schmutzpartikeln aufgrund eines partiellen Unterdrucks im Bereich der Blendenöffnung verhindert werden, da auch hier das aus dem Ringspalt austretende Spülgas einen derartigen Eintritt von Schmutzpartikeln in die Blendenöffnung verhindert.

Der Ringspalt ist besonders einfach herstellbar, wenn der Ringspalt zwischen einem inneren und einem äußeren Blendenring der Düseneinheit ausgebildet wird. So kann die Düseneinheit aus zwei oder mehr Blendenringen gebildet sein, wobei der äußere Blendenring einen Innendurchmesser aufweist, in den der innere Blendenring zumindest bereichsweise einsetzbar ist, so dass ein Ringspalt entsteht. Beispielsweise können die Blendenringe in vertikaler Richtung relativ zur Längsachse der Blendenöffnung so voneinander beabstandet sein, dass ein Zwischenraum oder auch Ringkanal ausgebildet wird, über den Spülgas in den Ringspalt einströmen kann. Eine Strömungsführungseinrichtung ist so besonders einfach herstellbar.

Folglich kann der Ringspalt unmittelbar mit einem Ringkanal verbunden sein. Wenn in dem Ringkanal bereits eine rotierende Spülgasströmung ausgebildet ist, kann sich eine Rotationsbewegung der Spülgasströmung über den Ringspalt hinaus in der Schmutzatmosphäre fortsetzen und aufgrund von so ausgebildeten Zentrifugalkräften der Spülgasströmung ein Eindringen von Schmutzpartikeln in die Blendenöffnung noch wirkungsvoller verhindern.

Ebenso kann der Ringspalt konisch, sich in Öffnungsrichtung der Blendenöffnung verjüngend, ausgebildet sein. Durch eine derartige, konische Gestaltung der aus dem Ringspalt austretenden Spülgasströmung wird es möglich, die aus der Blendenöffnung austretende Spülgasströmung zu bündeln, so dass Verwirbelungen, die bei Eintritt der Spülgasströmung in die Schmutzatmosphäre entstehen, in eine vergleichsweise große Entfernung von der Blendenöffnung verschoben werden. Durch eine derartige Beeinflussung bzw. unterschiedliche Ausbildung eines Austrittswinkels der Spülgasströmung aus dem Ringspalt können Lage, Form und Ausdehnung der Wirbel in der Schmutzgasatmosphäre beeinflusst werden. Ebenso kann eine Annäherung von Schmutzpartikeln an die Blendenöffnung reduziert werden.

Um eine hohe Austrittsgeschwindigkeit des Spülgases aus dem Ringspalt zu erzielen, kann ein Spaltkanal des Ringspalts so ausgebildet sein, dass er sich in Öffnungsrichtung der Blendenöffnung verjüngt.

Eine besonders gute Schutzwirkung für die Blendenöffnung ist erzielbar, wenn der Ringspalt unmittelbar an einem Außendurchmesser der Blendenöffnung angeordnet ist. Der Ringspalt kann sich demnach unmittelbar in einem Übergangsbereich einer Außenkante der Blendenöffnung bzw. einer Flanke und einer daran anschließenden Stirnseite eines Blendenrings oder einer Raumwandung befinden. Andere Positionen zur Ausbildung des Ringspalts innerhalb der Flanke oder in einem Abstand von der Blendenöffnung an der Stirnseite sind jedoch auch denkbar.

Das erfindungsgemäße Verfahren zum Schutz einer optischen Beobachtungsöffnung, insbesondere zum Schutz der Beobachtungsöffnung vor Verschmutzungen einer Schmutzatmosphäre eines Hochofens oder dergleichen, wird mit einer Düseneinheit und einem Spülgasraum ausgeführt, wobei die Düseneinheit eine Blendenöffnung für die Beobachtungsöffnung ausbildet und zur Ausbildung einer Spülgasströmung dient, wobei der Spülgasraum zwischen einer optischen Fläche der Beobachtungsöffnung und der Blendenöffnung ausgebildet wird, wobei der Spülgasraum mit einem Spülgas beaufschlagt und das Spülgas durch die Blendenöffnung in die Schmutzatmosphäre geleitet wird, wobei die Düseneinheit eine Strömungsführungseinrichtung aufweist, mittels der eine Strömungsführung von in die Schmutzatmosphäre austretenden Spülgas erfolgt.

Die Blendenöffnung ist konisch, sich in Öffnungsrichtung der Blendenöffnung erweiternd, ausgebildet, wobei die Strömungsführungseinrichtung derart ausgebildet wird, dass eine spiralförmige Bewegung des Spulgases um eine Längsachse der Blendenöffnung bewirkt wird, und dass die Düseneinheit eine weitere Strömungs-führungseinrichtung aufweist, die einen Ringspalt ausbildet, der die Blendenöffnung umgibt, und aus dem Spülgas ringförmig austritt.

Zu den, sich aus diesem Verfahren ergebenden Vorteilen wird auf die vorstehende Beschreibung der erfindungsgemäßen Vorrichtung verwiesen. Weitere vorteilhafte Ausführungsformen des Verfahrens ergeben sich aus den Merkmalsbeschreibungen der auf den Vorrichtungsanspruch rückbezogenen Unteransprüche.

Im Folgenden wird die Erfindung unter Bezugnahme auf die beigefügte Zeichnung näher erläutert.

Es zeigen:
- **Fig. 1**: eine perspektivische Schnittanschnitt eines Hochofens;
- **Fig. 2**: eine Längsschnittansicht einer Blendenöffnung nach dem Stand der Technik;
- **Fig. 3**: eine Längsschnittansicht einer Blendenöffnung mit einer Ausführungsform einer Strömungsführungseinrichtung;
- **Fig. 4**: eine Längsschnittansicht einer Blendenvorrichtung;
- **Fig. 5**: eine Querschnittansicht der Blendenvorrichtung aus **Fig. 4**;
- **Fig. 6**: eine perspektivische Schnittansicht der Blendenvorrichtung;
- **Fig. 7**: eine weitere perspektivische Schnittansicht der Blendenvorrichtung;
- **Fig. 8**: eine perspektivische Ansicht einer Düseneinheit;
- **Fig. 9**: eine Draufsicht der Düseneinheit;
- **Fig. 10**: eine Längsschnittansicht der Düseneinheit;
- **Fig. 11**: eine Draufsicht einer weiteren Düseneinheit;
- **Fig. 12**: eine Längsschnittansicht der weiteren Düseneinheit.

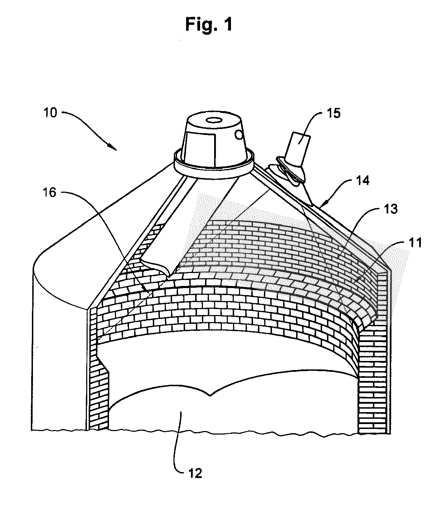

**Fig. 1** zeigt einen Hochofen 10 mit einem Innenraum 11 und einem Möller 12 sowie einer über dem Möller 12 im Innenraum 11 befindlichen Schmutzatmosphäre 13. An einer Außenwandung 14 des Hochofens 10 ist an einer hier nicht näher dargestellten Beobachtungsöffnung mit einer Blendenvorrichtung eine Kamera 15 angeordnet. Die Kamera 15 verfügt über ein ebenfalls hier nicht sichtbares Weitwinkelobjektiv, mit dem ein innerhalb eines Gesichtsfelds 16 bzw. Öffnungswinkels des Weitwinkelobjektivs befindliches Abbild des Innenraums 11 aufgenommen werden kann.

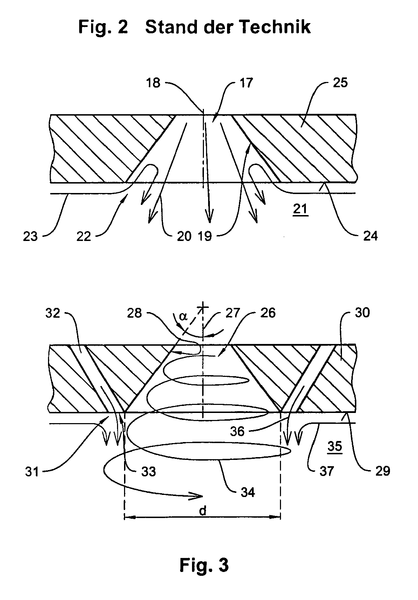

**Fig. 2** zeigt eine Blendenöffnung 17 nach dem Stand der Technik mit einer relativ zu einer Längsachse 18 so ausgebildeten konischen Flanke 19. Eine Spülgasströmung 20 ist hier mit Pfeilen dargestellt. Da die Spülgasströmung 20 unter hohem Druck aus der Blendenöffnung 17 austritt und so eine Expansion des Spülgases in einer Schmutzatmosphäre 21 nicht vollständig in der Blendenöffnung 17 erfolgen kann, entsteht in einem Bereich 22 der Flanke 19 ein Unterdruck, welcher eine mit Pfeilen gekennzeichnete Strömung 23 in der Schmutzatmosphäre 21 ausbildet. Mit der Strömung 23 werden hier nicht näher dargestellte Schmutzpartikel aus der Schmutzatmosphäre 21 entlang einer Stirnseite 24 eines Blendenrings 25 in die Blendenöffnung 17 herangeführt, und wie dargestellt im Bereich 22 verwirbelt bzw. von der Spülgasströmung 20 mitgerissen. Dabei kommt es zu einer Ablagerung von Schmutzpartikeln an der Flanke 19 und an der Stirnseite 24 in Nähe des Bereichs 22. Hier können sich so viele Schmutzpartikel ablagern, dass die Blendenöffnung 17 zuwächst und ein Öffnungswinkel verkleinert wird.

**Fig. 3** zeigt eine Blendenöffnung 26, welche konisch und rotationssymmetrisch zu einer Längsachse 27 ausgebildet ist und einen Öffnungswinkel α aufweist. Der Öffnungswinkel α entspricht in diesem Fall einem Öffnungswinkel eines hier nicht dargestellten Weitwinkelobjektivs an einer Beobachtungsöffnung. Die Blendenöffnung 26 bildet so eine Flanke 28 aus, welche in einem Außendurchmesser d an einer Stirnseite 29 eines äußeren Blendenrings 30 mündet. In dem äußeren Blendenring 30 ist weiter eine äußere Strömungsführungseinrichtung 31 ausgebildet, welche als ein konischer Spaltkanal 32 und rotationssymmetrisch zur Längsachse 27 mit einem Ringspalt 33 ausgebildet ist. Durch die Blendenöffnung 26 tritt eine mit einem Pfeil gekennzeichnete, spiralförmige Spülgasströmung 34 in eine Schmutzatmosphäre 35 ein. Die Spülgasströmung 34 expandiert unmittelbar während des Austritts aus der Blendenöffnung 26 aufgrund der so erzeugten Fliehkräfte derart, dass zwischen der Spülgasströmung 34 und der Flanke 28 kein Unterdruck entstehen kann bzw. die Spülgasströmung 34 die Flanke 28 bestreicht. Eine innere Strömungsführungseinrichtung zur Erzeugung der schraubenförmigen Spülgasströmung 34 ist hier nicht näher dargestellt. Die äußere Strömungsführungseinrichtung 31 erzeugt eine weitere Spülgasströmung 36, welche ebenfalls mit Pfeilen dargestellt ist. Die Spülgasströmung 36 tritt unmittelbar am Außendurchmesser d aus dem Ringspalt 33 in Richtung der Längsachse 27 aus und trifft mit der Spülgasströmung 34 zusammen. Ein so im Bereich der Stirnseite 29 erzeugter Unterdruck bewirkt eine Ausbildung einer mit Pfeilen gekennzeichneten Strömung 37 in der Schmutzatmosphäre 35. Mit der Strömung 37 herangetragene und hier nicht näher sichtbare Schmutzpartikel werden von der Spülgasströmung 36 mitgerissen, bevor sie überhaupt in den Bereich der Blendenöffnung 26 gelangen können. So ist bei einer möglichen Ablagerung von Schmutzpartikeln an der Stirnseite 29 ein Zuwachsen der Blendenöffnung 26 nicht möglich, da abgelagerte Schmutzpartikel den Ringspalt 33 bzw. die Spülgasströmung 36 nicht überwinden können. Auch ist eine Ablagerung von Schmutzpartikeln an der Flanke 28 weitestgehend ausgeschlossen, da hier kein Unterdruck erzeugt wird, der eine derartige Ablagerung begünstigen könnte. So werden Schmutzpartikel mittels der Spülgasströmung 34 von der Flanke 28 wegbefördert. Die Blendenöffnung 26 kann so frei von Verschmutzungen gehalten werden.

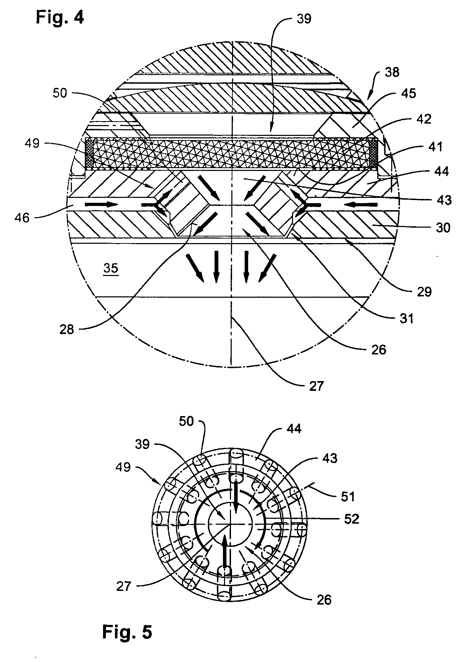

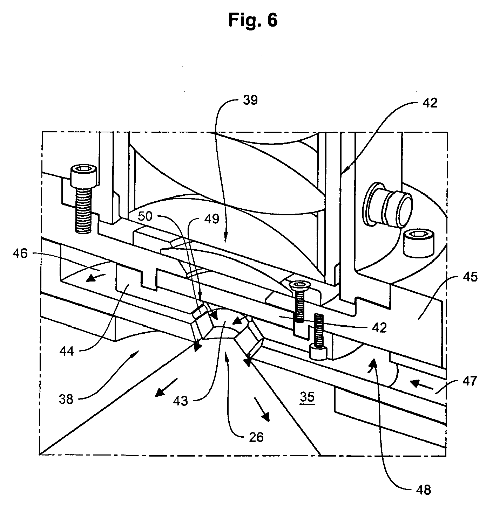

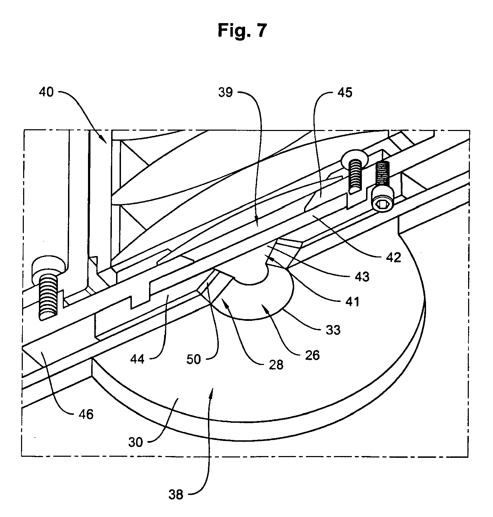

Eine Zusammenschau der **Fig. 4** bis 7 zeigt eine Blendenvorrichtung 38 in verschiedenen Darstellungen mit der Blendenöffnung 26 gemäß der vorangegangen Beschreibung zur **Fig. 3**. Die Blendenvorrichtung 38 dient zum Schutz einer Beobachtungsöffnung 39 mit einem Weitwinkelobjektiv 40 und einer hier nicht näher dargestellten Kamera. Zwischen einer optischen Fläche 41 einer Schutzscheibe 42 der Beobachtungsöffnung 39 und der Blendenöffnung 26 ist ein Spülgasraum 43 ausgebildet. Der Spülgasraum 43 ist konisch und rotationssymmetrisch zur Längsachse 27, sich in Öffnungsrichtung der Blendenöffnung 26 verjüngend, durch einen inneren Blendenring 44 ausgebildet. Der innere Blendenring 44 ist so mit einer Halterung 45 der Schutzscheibe 42 verschraubt, dass zwischen dem inneren Blendenring 44 und dem äußeren Blendenring 30 ein Ringkanal 46 ausgebildet ist. Dem Ringkanal 46 wird über eine Versorgungsleitung 47 aus Stickstoff bestehendes Spülgas unter hohem Druck zugeführt. In dem Ringkanal 46 ist eine mit Pfeilen 48 gekennzeichnete Rotationsströmung von Spülgas durch hier nicht näher dargestellte Mittel ausgebildet.

Das Spülgas gelangt von dem Ringkanal 46 über die hier gezeigte innere Strömungsführungseinrichtung 49 in den Spülgasraum 43. Die innere Strömungsführungseinrichtung 49 ist aus einer Mehrzahl von Durchgangsbohrungen 50 im inneren Blendenring 44 ausgebildet, wobei die Durchgangsbohrungen 50 mit ihren Längsachsen 51 in einer horizontalen Richtung quer zur Längsachse 27 angeordnet sind, derart, dass die Längsachsen 51 die Längsachse 27 nicht schneiden. So wird mit in den Spülgasraum 43 durch die Durchgangsbohrungen 50 einströmenden Spülgas ein mit dem Pfeil 52 dargestellter Drall des Spülgases innerhalb des Spülgasraumes 43 erzeugt, welcher sich beim Austritt aus der Blendenöffnung 26 in der Spülgasströmung 34 fortsetzt.

Der innere Blendenring 44 ist so in den äußeren Blendenring 30 eingesetzt, dass zwischen den Blendenringen 30 bzw. 44 der Spaltkanal 32 mit dem Ringspalt 33 ausgebildet wird. Wie insbesondere aus der **Fig. 4** zu ersehen ist, verjüngt sich der Spaltkanal 32, ausgehend vom Ringkanal 46 in Richtung der Blendenöffnung 26. So ist der Spaltkanal konisch ausgebildet und in Richtung der Längsachse 27 geneigt.

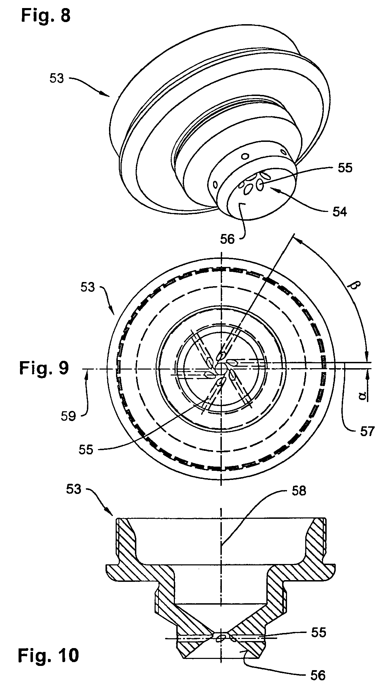

Eine Zusammenschau der **Fig. 8** bis **10** zeigt eine Düseneinheit 53 einer hier nicht näher dargestellten Blendenvorrichtung. Die Düseneinheit 53 bildet eine im Wesentlichen konisch ausgebildete Blendöffnung 54 aus, wobei Durchgangsbohrungen 55 so angeordnet sind, dass sie innerhalb einer Flanke 56 der Blendenöffnung 54 austreten. Kanallängsachsen 57 der Durchgangsbohrungen 55 verlaufen relativ zu einer Längsachse 58 der Blendenöffnung 54 quer, ohne diese zu schneiden. So verlaufen die Durchgangsbohrungen 55 parallel versetzt um einen Abstand a relativ zu einer Längsschnittebene 59 der Düseneinheit 53. Weiter sind die Durchgangsbohrungen 55 um einen Winkel β voneinander versetzt angeordnet.

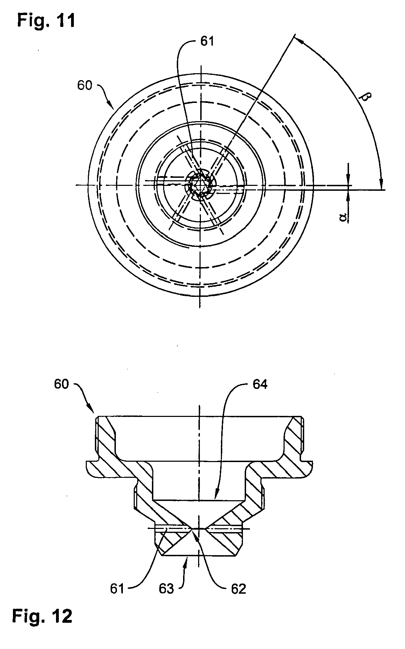

Eine Zusammenschau der **Fig. 11** und **12** zeigt eine weitere Ausführungsform einer Düseneinheit 60, wobei hier Durchgangsbohrungen 61 im Bereich einer Engstelle 62 zwischen einer Blendenöffnung 63 und einem Spülgasraum 64, der hier nur teilweise dargestellt ist, angeordnet sind.

## Patentansprüche

1. Blendenvorrichtung (38) zum Schutz einer optischen Beobachtungsöffnung (39), insbesondere zum Schutz der Beobachtungsöffnung vor Verschmutzungen einer Schmutzatmosphäre eines Hochofens oder dergleichen, mit einer Düseneinheit (53, 60) und einem Spülgasraum (43, 64), wobei die Düseneinheit eine Blendenöffnung (26, 54, 63) für die Beobachtungsöffnung ausbildet und zur Ausbildung einer Spülgasströmung (34) dient, wobei der Spülgasraum zwischen einer optischen Fläche (41) der Beobachlungsöffnung und der Blendenöffnung ausgebildet ist, wobei der Spülgasraum mit einem Spülgas beaufschlagt und das Spülgas durch die Blendenöffnung in die Schmutzatmosphäre (35) geleitet werden kann, wobei die Düseneinheit eine Strömungsführungseinrichtung (31, 49) aufweist, die eine Strömungsführung von in die Schmutzatmosphäre austretendem Spülgas bewirkt, wobei die Blendenöffnung konisch, sich in Öffnungsrichtung der Blendenöffnung erweiternd, ausgebildet ist, wobei die Strömungsführungseinrichtung (49) derart ausgebildet ist, dass eine spiralförmige Bewegung des Spülgases um eine Längsachse (27, 58) der Blendenöffnung bewirkt werden kann,
**dadurch gekennzeichnet,**
**dass** die Düseneinheit eine weitere Strömungsführungseinrichtung (31) aufweist, die einen Ringspalt (33) ausbildet, der die Blendenöffnung umgibt, und aus dem Spülgas ringförmig austreten kann.

2. Blendenvorrichtung nach Anspruch 1,
**dadurch gekennzeichnet,**
**dass** der Spülgasraum (43, 64) konisch, sich in Öffnungsrichtung der Blendenöffnung (26, 54, 63) verjüngend, ausgebildet ist.

3. Blendenvorrichtung nach Anspruch 1 oder 2,
**dadurch gekennzeichnet,**
**dass** in der Blendenvorrichtung (38) ein kreisringförmiger Ringkanal (46) ausgebildet ist, mittels dem der Düseneinheit (53, 60) Spülgas zuführbar ist.

4. Blendenvorrichtung nach einem der vorangehenden Ansprüche,
**dadurch gekennzeichnet,**
**dass** die Strömungsführungseinrichtung (31, 49) relativ zu einer Längsachse (27, 58) der Blendenöffnung (26, 54, 63) rotationssymmetrisch ausgebildet ist.

5. Blendenvorrichtung nach einem der vorangehenden Ansprüche,
**dadurch gekennzeichnet,**
**dass** die Strömungsführungseinrichtung (49) zwischen einem Ringkanal (46) und dem Spülgasraum (43) angeordnet ist.

6. Blendenvorrichtung nach einem der Ansprüche 1 bis 4,
**dadurch gekennzeichnet,**
**dass** die Strömungsführungseinrichtung zwischen einem Ringkanal und der Blendenöffnung (54) angeordnet ist.

7. Blendenvorrichtung nach einem der Ansprüche 1 bis 4,
**dadurch gekennzeichnet,**
**dass** die Strömungsführungseinrichtung zwischen einem Ringkanal und einem Ühergangsbercich (62) zwischen dem Spülgasraum (64) und der Blendenöffnung (63) angeordnet ist.

8. Blendenvorrichtung nach einem der vorangehenden Ansprüche,
**dadurch gekennzeichnet,**
**dass** die Strömunssführungseinrichtung Strömungskanäle ausbildet, deren Kanallängsachsen (51, 57) jeweils quer, relativ zur der Längsachse (27, 58) der Blendenöffnung (26, 54, 63) verlaufen ohne die Längsachse zu schneiden.

9. Blendenvorrichtung nach Anspruch 8,
**dadurch gekennzeichnet,**
**dass** die Strömungskanäle aus Bohrungen (50, 55, 61) oder Lamellen gebildet sind.

10. Blendenvorrichtung nach einem der vorangehenden Ansprüche,
**dadurch gekennzeichnet,**
**dass** der Ringspalt (33) zwischen einem inneren und einem äußeren Blendenring (44; 30) der Düseneinheit ausgebildet ist.

11. Blendenvorrichtung nach einem der vorangehenden Ansprüche,
**dadurch gekennzeichnet,**
**dass** der Ringspalt (33) unmittelbar mit einem Ringkanal (46) verbunden ist.

12. Blendenvorrichtung nach einem der vorangehenden Ansprüche,
**dadurch gekennzeichnet,**
**dass** der Ringspalt (33) konisch, sich in Öffnungsrichtung der Blendenöffnung (26, 54, 63) verjüngend, ausgebildet ist.

13. Blendenvorrichtung nach einem der vorangehenden Ansprüche,
**dadurch gekennzeichnet,**
**dass** ein Spaltkanal (32) des Ringspalts (33) sich in Öffnungsrichtung der Blendenöffnung (26, 54, 63) verjüngend, ausgebildet ist.

14. Blendenvorrichtung nach einem der vorangehenden Ansprüche,
**dadurch gekennzeichnet,**
**dass** der Ringspalt (33) unmittelbar an einem Außendurchmesser (d) der Blendenöffnung (26, 54, 63) angeordnet ist.

15. Verfahren zum Schutz einer optischen Beobachtungsöffnung (39), insbesondere zum Schutz der Beobachtungsöffnung vor Verschmutzungen einer Schmutzatmosphäre eines Hochofens oder dergleichen, mit einer Düseneinheit (53, 60) und einem Spülgasraum (43, 64), wobei die Düseneinheit eine Blendenöffnung (26, 54, 63) für die Beobachtungsöffnung ausbildet und zur Ausbildung einer Spülgasströmung (34) dient, wobei der Spülgasraum zwischen einer optischen Fläche (41) der Beobachtungsöffnung und der Blendenöffnung ausgebildet wird, wobei der Spülgasraum mit einem Spülgas beaufschlagt und das Spülgas durch die Blendenöffnung in die Schmutzatmosphäre (35) geleitet wird, wobei die Düseneinheit eine Strömungsführungseinrichtung (31, 49) aufweist, mittels der eine Strömungsführung von in die Schmutzatmosphäre austretenden Spülgas erfolgt, wobei die Blendenöffnung konisch, sich in Öffnungsrichtung der Blendenöffnung erweiternd, ausgebildet wird, wobei die Strömungsführungseinrichtung (49) derart ausgebildet wird, dass eine spiralförmige Bewegung des Spülgases um eine Längsachse (27, 58) der Blendenöffnung bewirkt wird,
**dadurch gekennzeichnet,**
**dass** die Düseneinheit eine weitere Strömungsführungseinrichtung (31) aufweist, die einen Ringspalt (33) ausbildet, der die Blendenöffnung umgibt, und aus dem Spülgas ringförmig austritt.

## Claims

1. A diaphragm device (38) for protecting an optical observation opening (39), in particular for protecting the observation opening against contaminants from a dirty atmosphere in a blast furnace or the like, having a nozzle unit (53, 60) and a purging gas chamber (43, 64), wherein the nozzle unit forms a diaphragm aperture (26, 54, 63) for the observation opening and serves for forming a purging gas flow (34), wherein the purging gas chamber is formed between an optical surface (41) of the observation opening and the diaphragm aperture, wherein a purging gas is applied to the purging gas chamber and the purging gas can be guided through the diaphragm aperture into the dirty atmosphere (35), wherein the nozzle unit comprises a flow guiding device (31, 49) which effects a guiding of the flow of purging gas escaping into the dirty atmosphere, wherein the diaphragm aperture is formed conic, widening in the opening direction of the diaphragm aperture, wherein the flow guiding device (49) is formed such that a helical motion of the purging gas about a longitudinal axis (27, 58) of the diaphragm aperture can be effected,
**characterized in that**
the nozzle unit comprises another flow guiding device (31) forming an annular gap (33) which surrounds the diaphragm aperture and from which purging gas can escape annularly.

2. The diaphragm device according to claim 1,
**characterized in that**
the purging gas chamber (43, 64) is formed conic, tapering in the opening direction of the diaphragm aperture (26, 54, 63).

3. The diaphragm device according to claim 1 or 2,
**characterized in that**
in the diaphragm device (38) an annular duct (46) is formed by means of which purging gas can be supplied to the nozzle unit (53, 60).

4. The diaphragm device according to any of the preceding claims,
**characterized in that**
the flow guiding device (31, 49) is formed rotationally symmetric relative to a longitudinal axis (27, 58) of the diaphragm aperture (26, 54, 63).

5. The diaphragm device according to any of the preceding claims,
**characterized in that**
the flow guiding device (49) is arranged between an annular duct (46) and the purging gas chamber (43).

6. The diaphragm device according to any of the claims 1 to 4,
**characterized in that**
the flow guiding device is arranged between an annular duct and the diaphragm aperture (54).

7. The diaphragm device according to any of the claims 1 to 4,
**characterized in that**
the flow guiding device is arranged between an annular duct and a transition area (62) between the purging gas chamber (64) and the diaphragm aperture (63).

8. The diaphragm device according to any of the preceding claims,
**characterized in that**
the flow guiding device forms flow ducts whose longitudinal duct axes (51, 57) run transverse relative to the longitudinal axis (27, 58) of the diaphragm aperture (26, 54, 63), respectively, without intersecting the longitudinal axis.

9. The diaphragm device according to claim 8,
**characterized in that**
the flow ducts are formed of drill holes (50, 55, 61) or lamellas.

10. The diaphragm device according to any of the preceding claims,
**characterized in that**
the annular gap (33) is formed between an inner and an outer diaphragm ring (44; 30) of the nozzle unit.

11. The diaphragm device according to any of the preceding claims,
**characterized in that**
the annular gap (33) is directly connected to an annular duct (46).

12. The diaphragm device according to any of the preceding claims,
**characterized in that**
the annular gap (33) is formed conic, tapering in the opening direction of the diaphragm aperture (26, 54, 63).

13. The diaphragm device according to any of the preceding claims,
**characterized in that**
a gap duct (32) of the annular gap (33) is formed tapering in the opening direction of the diaphragm aperture (26, 54, 63).

14. The diaphragm device according to any of the preceding claims,
**characterized in that**
the annular gap (33) is arranged directly on an outer diameter (d) of the diaphragm aperture (26, 54, 63).

15. A method for protecting an optical observation opening (39), in particular for protecting the observation opening against contaminants from a dirty atmosphere in a blast furnace or the like, having a nozzle unit (53, 60) and a purging gas chamber (43, 64), wherein the nozzle unit forms a diaphragm aperture (26, 54, 63) for the observation opening and serves for forming a purging gas flow (34), wherein the purging gas chamber is formed between an optical surface (41) of the observation opening and the diaphragm aperture, wherein a purging gas is applied to the purging gas chamber and the purging gas is guided through the diaphragm aperture into the dirty atmosphere (35), wherein the nozzle unit comprises a flow guiding device (31, 49) by means of which a guiding of the flow of purging gas escaping into the dirty atmosphere is effected, wherein the diaphragm aperture is formed conic, widening in the opening direction of the diaphragm aperture, wherein the flow guiding device (49) is formed such that a helical motion of the purging gas about a longitudinal axis (27, 58) of the diaphragm aperture is effected,
**characterized in that**
the nozzle unit comprises another flow guiding device (31) forming an annular gap (33) which surrounds the diaphragm aperture and from which purging gas escapes annularly.

## Revendications

1. Dispositif de diaphragme (38) pour protéger une ouverture d'observation (39) optique, en particulier pour protéger l'ouverture d'observation des salissures d'une atmosphère sale dans un haut fourneau ou des choses semblables, comprenant une unité de buse (53, 60) et une chambre de gaz de purge (43, 64), l'unité de buse formant une ouverture de diaphragme (26, 54, 63) et servant à la formation d'un flux de gaz de purge (34), la chambre de gaz de purge étant formée entre une surface optique (41) de l'ouverture d'observation et l'ouverture de diaphragme, dans lequel un gaz de purge peut être appliqué à la chambre de gaz de purge et le gaz de purge peut être guidé à travers l'ouverture de diaphragme dans l'atmosphère sale (35), dans lequel l'unité de buse comprend un dispositif de guidage de flux (31, 49) produisant un guidage du gaz s'échappant dans l'atmosphère sale, dans lequel l'ouverture de diaphragme est formé sous forme conique, s'élargissant en direction d'ouverture de l'ouverture de diaphragme, dans lequel le dispositif de guidage de flux (49) est formé de telle façon qu'un mouvement spiroïdal du gaz de purge puisse être produit autour un axe longitudinal (27, 58) de l'ouverture de diaphragme,
**caractérisé en ce que**
l'unité de buse comprend un autre dispositif de guidage de flux (31) qui forme une fissure annulaire (33) entourant l'ouverture de diaphragme, duquel de gaz de purge peut sortir.

2. Dispositif de diaphragme selon la revendication 1,
**caractérisé en ce que**
la chambre de gaz de purge (43, 64) est formée sous forme conique, diminuant en direction d'ouverture de l'ouverture de diaphragme (26, 54, 63).

3. Dispositif de diaphragme selon la revendication 1 ou 2,
**caractérisé en ce que**
dans le dispositif de diaphragme (38) un canal annulaire (46) est formé par lequel l'unité de buse (53, 60) peut être alimenté en gaz de purge.

4. Dispositif de diaphragme selon l'une quelconque des revendications précédentes,
**caractérisé en ce que**
le dispositif de guidage de flux (31, 49) est formé à symétrie de rotation par rapport à un axe longitudinal (27, 58) de l'ouverture de diaphragme (26, 54, 63).

5. Dispositif de diaphragme selon l'une quelconque des revendications précédentes,
**caractérisé en ce que**
le dispositif de guidage de flux (49) est disposé entre un canal annulaire (46) et la chambre de gaz de purge (43).

6. Dispositif de diaphragme selon l'une quelconque des revendications 1 à 4,
**caractérisé en ce que**
le dispositif de guidage de flux est disposé entre un canal annulaire et l'ouverture de diaphragme (54).

7. Dispositif de diaphragme selon l'une quelconque des revendications 1 à 4,
**caractérisé en ce que**
le dispositif de guidage de flux est disposé entre un canal annulaire et une région de transition (62) entre la chambre de gaz de purge (64) et l'ouverture de diaphragme (63).

8. Dispositif de diaphragme selon l'une quelconque des revendications précédentes,
**caractérisé en ce que**
le dispositif de guidage de flux forme des canaux de flux dont les axes longitudinaux de canal (51, 57) s'étendent respectivement transversalement, par rapport à l'axe longitudinal (27, 58) de l'ouverture de diaphragme (26, 54, 63) sans croiser l'axe longitudinal.

9. Dispositif de diaphragme selon la revendication 8,
**caractérisé en ce que**
les canaux de flux sont formés par des forages (50, 55, 61) ou des lamelles.

10. Dispositif de diaphragme selon l'une quelconque des revendications précédentes,
**caractérisé en ce que**
la fissure annulaire (33) est formée entre une bague de diaphragme intérieure et une bague de diaphragme extérieure (44 ; 30) de l'unité de buse.

11. Dispositif de diaphragme selon l'une quelconque des revendications précédentes,
**caractérisé en ce que**
la fissure annulaire (33) est directement connectée à un canal annulaire (46).

12. Dispositif de diaphragme selon l'une quelconque des revendications précédentes,
**caractérisé en ce que**
la fissure annulaire (33) est formée sous forme conique, diminuant en direction d'ouverture de l'ouverture de diaphragme (26, 54, 63).

13. Dispositif de diaphragme selon l'une quelconque des revendications précédentes,
**caractérisé en ce qu'**
un canal de fissure (32) de la fissure annulaire (33) est formé sous forme diminuant en direction d'ouverture de diaphragme (26, 54, 63).

14. Dispositif de diaphragme selon l'une quelconque des revendications précédentes,
**caractérisé en ce que**
la fissure annulaire (33) est disposée directement à un diamètre extérieur (d) de l'ouverture de diaphragme (26, 54, 63).

15. Procédure pour protéger une ouverture d'observation (39) optique, en particulier pour protéger l'ouverture d'observation des salissures d'une atmosphère sale dans un haut fourneau ou des choses semblables, comprenant une unité de buse (53, 60) et une chambre de gaz de purge (43, 64), l'unité de buse formant une ouverture de diaphragme (26, 54, 63) pour l'ouverture d'observation et servant à la formation d'un flux de gaz de purge (34), la chambre de gaz de purge étant formée entre une surface optique (41) de l'ouverture d'observation et l'ouverture de diaphragme, dans lequel un gaz de purge est appliqué à la chambre de gaz de purge et le gaz de purge est guidé à travers l'ouverture de diaphragme dans l'atmosphère sale (35), dans lequel l'unité de buse comprend un dispositif de guidage de flux (31, 49) produisant un guidage du gaz s'échappant dans l'atmosphère sale, dans lequel l'ouverture de diaphragme est formé sous forme conique, s'élargissant en direction d'ouverture de l'ouverture de diaphragme, dans lequel le dispositif de guidage de flux (49) est formé de telle façon qu'un mouvement spiroïdal du gaz de purge soit produit autour un axe longitudinal (27, 58) de l'ouverture de diaphragme,
**caractérisé en ce que**
l'unité de buse comprend un autre dispositif de guidage de flux (31) qui forme une fissure annulaire (33) entourant l'ouverture de diaphragme, duquel de gaz de purge peut sortir.
